# FASCICULE DE BREVET EUROPEEN

(11) **EP 1 992 055 B1**
(45) Date de publication et mention de la délivrance du brevet: **28.07.2010**
(21) Numéro de dépôt: 07731673.5
(22) Date de dépôt: 28.02.2007
(51) Int. Cl.: H02K 7/00

(54) **DISPOSITIF D'ASSEMBLAGE D'UN ORGANE D'ENTRAINEMENT AVEC UN ARBRE ACCOUPLE AU ROTOR D'UNE MACHINE ELECTRIQUE TOURNANTE**
VERFAHREN ZUM ZUSAMMENBAU EINES ANTRIEBSGLIEDS MIT EINER MIT DEM ROTOR EINER ROTIERENDEN ELEKTRISCHEN MASCHINE GEKOPPELTEN WELLE
METHOD OF ASSEMBLING A DRIVE MEMBER WITH A SHAFT COUPLED TO THE ROTOR OF A ROTATING ELECTRICAL MACHINE

(30) Priorité: 01.03.2006 FR 0601808
(43) Date de publication de la demande: 19.11.2008
(73) Titulaire: VALEO EQUIPEMENTS ELECTRIQUES MOTEUR, 94046 Créteil Cedex (FR)
(72) Inventeur: PFLEGER, Alexandre, 93160 Noisy-Le-Grand (FR); STOFLETH, Karine, 94700 Maisons Alfort (FR); SCHULTE, Dirk, 13100 - 057 CAMPINAS (BR); LENOIR, Romaric, 62176 Ste Cecile (FR); DUCROCQ, Yves, 62560 Gournay-Verchocq (FR)
(74) Mandataire: Gamonal, Didier
(86) Numéro de dépôt international: PCT/FR2007/050856
(87) Numéro de publication internationale: WO 2007/099260

(56) Documents cités:
- EP-A- 1 293 665
- EP-A1- 0 359 653
- WO-A-01/69762
- DE-A1- 19 543 541
- FR-A1- 2 828 774
- FR-A1- 2 839 397
- US-A- 5 418 400

## Description

### Domaine de l'invention

L'invention concerne un dispositif d'assemblage par vissage d'un organe d'entraînement, tel qu'une poulie d'entraînement, avec un arbre destiné à être accouplé au rotor d'une machine électrique tournante, telle qu'un alternateur ou un alterno-démarreur de véhicule automobile, l'organe d'entraînement comportant, d'une part, une cavité dotée d'un fond ou un manchon et d'autre part, un trou central pourvu d'un tronçon interne fileté débouchant au niveau de la face avant du fond ou du manchon, tandis que l'arbre comporte à l'avant une partie filetée destinée à coopérer avec le tronçon fileté de l'organe d'entraînement pour le vissage de celle-ci,
L'invention concerne également un procédé de fabrication du dispositif d'assemblage.

### Etat de la technique

Il est déjà connu d'assurer l'assemblage par vissage d'un organe d'entraînement en forme de poulie sur l'arbre d'un rotor d'une machine électrique tournante sous la forme d'un alternateur pour véhicule automobile.

Pour ce faire la poulie comporte un trou axial central pour le passage de l'arbre. Ce trou est muni d'un filetage interne constituant un taraudage, qui se visse sur une partie filetée de l'arbre rotatif. Ce vissage s'effectue jusqu'à venue en en appui de la poulie contre une butée axiale portée par l'arbre.

Cette butée est constituée par exemple par la bague interne d'un roulement à billes, que comporte la machine pour le montage rotatif de l'arbre ou en variante par une entretoise intercalée axialement entre la poulie et la bague interne dudit roulement.

Dans tous les cas lors de la venue en prise de la poulie avec la butée axiale on met sous tension le dispositif d'assemblage ce qui permet d'assurer une résistance au glissement entre la poulie et l'arbre.

Le sens du filetage interne de la poulie et de l'extrémité filetée de l'arbre sont de préférence choisis de manière qu'en fonctionnement de l'alternateur la rotation de la poulie et du rotor ait tendance à visser le dispositif d'assemblage.

Cette solution donne satisfaction.

Néanmoins il est souhaitable que l'assemblage puisse résister à des couples plus forts, par exemple à des couples supérieurs à 70Nm, notamment lors du démarrage du moteur thermique pour les alterno-démarreurs, qui ainsi qu'on le sait sont des alternateurs réversibles transformant également de l'énergie électrique en énergie mécanique notamment pour démarrer le moteur thermique du véhicule. Lors de ce démarrage du moteur thermique le couple tend à desserrer la poulie.

### Objet de l'invention

La présente invention a pour but de proposer une solution qui satisfait à cette exigence.
Pour atteindre ce but le dispositif d'assemblage à vissage selon l'invention est **caractérisé en ce qu**'il comporte une liaison supplémentaire par soudage réalisée entre la face avant du fond ou du manchon de l'organe d'entraînement et la partie filetée de l'arbre.

Grâce à l'invention on obtient un assemblage ferme et fiable entre l'arbre et l'organe d'entraînement sans modification profonde du dispositif d'assemblage à nombre réduit de pièces.

Ce dispositif transmet des couples importants et résiste aux phénomènes d'acyclismes du moteur thermique du véhicule.

Grâce à l'assemblage par vissage on peut effectuer la liaison par soudage.

Plus précisément le procédé de fabrication du dispositif d'assemblage par vissage selon l'invention comporte une étape de vissage de l'organe d'entraînement sur la partie filetée de l'arbre suivie d'un opération de soudage lors de laquelle on présente verticalement l'arbre équipé de son organe d'entraînement pour procéder au soudage par en-dessous.

Lors de ce soudage la poulie constitue un écran protecteur.

Selon d'autres caractéristiques prises individuellement ou en combinaison :
- la liaison supplémentaire consiste en un soudage du type TIG avec apport ou sans apport de matière ;
- la liaison supplémentaire consiste en un soudage du type laser, notamment par transparence;
- la liaison supplémentaire consiste en un soudage du type MIG ou MAG;
- le fond ou le manchon sont chanfreinés en vue de l'opération de soudage ;

L'invention sera mieux comprise, et d'autres buts, caractéristiques, détails et avantages de celle-ci apparaîtront plus clairement dans la description explicative qui va suivre faite en référence aux dessins annexés.

### Brève description des dessins

- la figure 1 est une vue, partiellement en coupe axiale, d'une machine électrique tournante, simplifiée, équipée d'un dispositif d'assemblage par vissage de l'organe d'entraînement, en forme de poulie, avec le rotor de la machine , selon l'invention ;
- la figure 2 est une vue partiellement en coupe des extrémités des outils de vissage de l'organe d'entraînement sur l'arbre de la figure 1;
- la figure 3 est une vue partielle de la partie avant de la machine électrique tournante équipée d'un organe d'entraînement modifié par rapport à celui de la figure 1.

### Description de l'invention

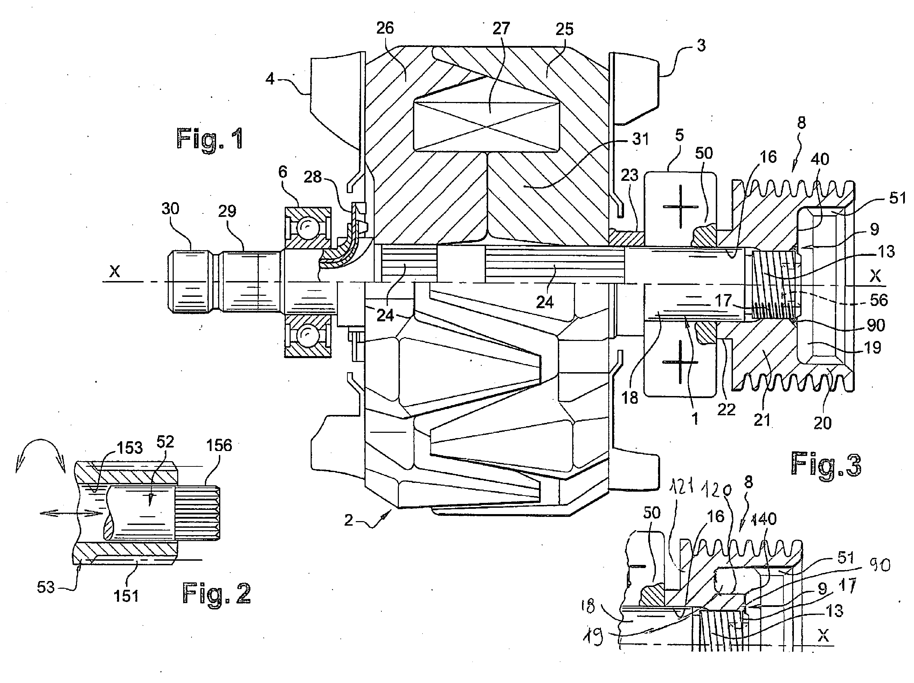

La figure 1 illustre un dispositif d'assemblage 9 par vissage selon l'invention appliqué à une machine électrique tournante sous la forme d'un alternateur ou en variante un alternateur réversible appelé alterno-démarreur présentant un organe d'entraînement sous la forme d'une poulie 8 de forme annulaire se vissant sur un arbre 1 accouplé au rotor 2 de la machine.

La figure 1 représente de l'ensemble de la machine électrique tournante seulement les parties qui sont nécessaires pour la compréhension de l'invention, à savoir l'arbre 1, le rotor 2 solidaire en rotation de l'arbre, les ventilateurs avant et arrière respectivement 3 et 4, les roulements à billes avant et arrière respectivement 5 et 6 de support de l'arbre 1 pour montage à rotation de cet arbre 1, l'organe d'entraînement 8 et le dispositif 9 d'assemblage par vissage de l'organe d'entraînement 8 avec l'arbre 1 présentant un axe X-X de symétrie axiale constituant l'axe de rotation de la machine électrique tournante.

Dans ce type de machine l'arbre 1 est mené et constitue un arbre d'entrée lorsque la machine est un alternateur ou un alterno-démarreur fonctionnant en mode alternateur pour transformer de l'énergie mécanique en énergie électrique. Cet arbre 1 est menant et constitue un arbre de sortie lorsque la machine est un alterno-démarreur fonctionnant en mode moteur électrique notamment pour démarrer le moteur thermique du véhicule et transformer de l'énergie électrique en énergie mécanique.

Dans tous les cas l'arbre 1 est accouplé au rotor 2. Dans le mode de réalisation de la figure 1 cet accouplement est réalisé de manière directe, l'arbre 1 portant à solidarisation le rotor 2.

Cet alternateur ou alterno-démarreur comporte un stator bobiné et un carter (non représentés).

Pour mémoire on rappellera que les roulements 5, 6 sont supportés par des paliers avant et arrière ajourés (non représentés) appartenant au carter portant le stator bobiné de l'alternateur ou de l'alterno-démarreur. Ces paliers avant et arrière présentent chacun un alésage centrale pour le montage du roulement à billes respectivement avant 5 et arrière 6 de support de l'arbre 1. La poulie 8 est implantée à l'extérieur du palier avant de manière adjacente à celui-ci. L'arbre 1 traverse le palier avant et pénètre dans l'organe d'entraînement en forme de poulie 8.

Cet l'arbre 1 est métallique et présente à l'avant, à l'extérieur du palier avant, une partie filetée 13, tandis que la poulie 8 présente un trou interne central 16,17 d'orientation axiale traversé par cette partie 13.

Le trou 16,17 axial comporte un tronçon lisse 16 et un tronçon fileté interne 17 constituant un taraudage.

Le tronçon lisse 16 s'étend à l'arrière du trou et le tronçon fileté°17 à l'avant du trou.

Le tronçon lisse 16 est destiné à recevoir, ici selon un ajustage précis, un tronçon lisse complémentaire 18 de l'arbre 1 sur lequel est monté la bague interne du roulement 5 de plus grande taille que celle du roulement 6. Dans cette figure 1 on a représenté partiellement en 50 la bague interne du roulement 5 et complètement la bague interne du roulement 6.

Le tronçon interne fileté 17 est destiné à coopérer de manière complémentaire, c'est-à-dire à venir en prise avec une partie filetée 13 de l'arbre 1 constituée dans cet exemple de réalisation par l'extrémité avant fileté 13 de cet arbre 1 en sorte que la poulie 8 se visse sur l'arbre 1. Le dispositif d'assemblage 9 par vissage comporte donc le tronçon 17 et l'extrémité filetée 13.

Le tronçon 17 est axialement plus court que l'extrémité avant 13 de diamètre externe inférieur à celui du tronçon 18.

De même le diamètre et la longueur axiale du tronçon 16 sont supérieurs à ceux du tronçon 17.

La poulie 8 présente à sa périphérie externe 20, de forme annulaire et d'orientation axiale, des gorges circonférentielles pour réception d'une courroie complémentaire ici multi gorges appartenant au dispositif de transmission de mouvement intervenant entre l'arbre 1 et le moteur thermique, tel que le moteur thermique d'un véhicule automobile.

La poulie 8 est creuse à l'avant. Plus précisément cette poulie 8 présente à l'avant une cavité 19 délimitée par la périphérie externe 20 de la poulie et un fond 21 d'orientation transversale par rapport à l'axe X-X.

Le trou central 16, 17 est réalisé dans le mode de réalisation de la figure 1 dans le fond 21, qui est massif et qui présente un rebord annulaire 22 d'orientation axiale saillant en direction du roulement 5 pour coopération avec la bague interne 50 de celui-ci.

En variante, comme visible à la figure 3, la poulie 8 est plus profonde et est du type de celle décrite dans le document FR A 2 813 105 en sorte que le fond consiste en un flasque 121 implanté à l'arrière de la poulie.

Ce flasque arrière porte un manchon central 120 saillant axialement vers l'extérieur et traversé par l'arbre 1. Ce manchon est doté des tronçons 16, 17.

En variante ce fond est implanté entre les extrémités axiales du manchon à tronçons 16, 17.

Une entretoise 23 est intercalée axialement entre l'autre face de la bague interne 50 du roulement 5 et la face avant du rotor 2 porté par l'arbre 1. Le rotor de la figure 1 est un rotor à griffes comportant de manière connue deux roues polaires 25, 26 et un bobinage inducteur 27 intercalé axialement entre les roues 25, 26. Ce bobinage 27 est porté par un noyau 31 constitué ici par deux demi noyaux venu chacun de moulage avec la roue polaire concernée.

Les roues polaires 25, 26 et le noyau 31 sont troués centralement pour montage par emmanchement à force de l'arbre métallique 1 présentant pour ce faire des portions moletées 24 entre ces extrémités avant et arrière.

Les roues 25, 26 et le noyau 31, ici en matière ferromagnétique, sont donc solidaires en rotation et en translation de l'arbre 1 en matière plus dure et ferromagnétique.

Les extrémités du bobinage 27 sont reliées par des liaisons filaires 28 à des bagues collectrices 29, 30 sur lesquelles viennent frotter des balais non visibles.

Les bagues 30, 29 sont solidaires de l'extrémité arrière de l'arbre 1.
Pour plus de précisions on se reportera par exemple au document WO 01/69762 montrant également les paliers avant et arrière sachant que la configuration de la figure 1 est identique pour un alternateur et un alterno-démarreur.
Dans une première étape de fabrication de la machine on emmanche donc à force l'arbre 1 dans les roues polaires 25, 26 et dans le noyau 31 pour former un sous-ensemble rotor 2 - arbre 1 que l'on monte ensuite dans les paliers avant et arrière de l'alternateur ou de l'alterno-démarreur.
La poulie 8 s'étend donc en saillie axiale par rapport au palier avant.
Dans une seconde étape on visse le tronçon fileté interne de la poulie 8 sur l'extrémité filetée 13 de l'arbre 1.

Lors de ce vissage la poulie 8 vient en appui, ici via l'extrémité arrière de son rebord saillant 22, contre la butée axiale constituée par la bague interne 50 du roulement avant 5 calée axialement par l'entretoise 23. En variante le rebord saillant 22 est remplacé par une rondelle entretoise en sorte que lors du vissage l'extrémité arrière de la poulie 8 vient en appui contre une butée axiale constituée par cette rondelle calée axialement par la bague interne 50 et l'entretoise 23.

La butée est donc constituée de manière directe ou indirecte par la bague 50 portée par l'arbre 1.

Lors du vissage on met donc sous tension en final le dispositif d'assemblage 9.

Dans un mode de réalisation le sens du filetage interne 17 de la poulie et de l'extrémité filetée 13 de l'arbre sont de préférence choisis de manière qu'en fonctionnement de l'alternateur la rotation de la poulie et du rotor ait tendance à visser le dispositif d'assemblage. Autrement dit ce sens correspond au sens de rotation de la poulie 8 lorsque l'arbre 1 est mené.

Le vissage de la poulie 8 sur l'arbre 1 est réalisé à l'aide d'outils 52, 53 dont les extrémités sont visibles à la figure 2.

A cet effet à la figure 1 le bout de l'extrémité filetée 13 de l'arbre comporte une empreinte 56.

De même la cavité 19 présente à sa périphérie externe une empreinte 51.

Dans un mode de réalisation, l'empreinte 56, 51 consiste en une denture interne multiple dans laquelle vient en prise, au montage de la poulie, une denture multiple externe complémentaire 156, 151, de l'outil respectivement interne 52 et externe 53.

L'empreinte 56, 51 peut avoir en variante un profil hexagonal ou Torx (marque déposée) ou consister en une fente, l'outil 52, 53 ayant une forme complémentaire à celle de l'empreinte 56,51.

Les outils 52, 53 sont concentriques comme visible à la figure 2.

L'outil externe 53 présente un alésage interne 153 pour passage de l'outil interne 52, qui peut se déplacer axialement dans un sens et dans l'autre par rapport à l'outil externe 53.

Dans cette figure 2 on voit en 151 l'empreinte externe de l'outil 53 destinée à coopérer avec l'empreinte 51 de la cavité 19 et en 156 l'empreinte de l'outil interne 52 destinée à coopérer avec l'empreinte 56 du bout de l'extrémité filetée 13 de l'arbre 1.

Lors du vissage de la poulie 8 sur l'arbre 1, l'outil 52 ne tourne pas tandis que l'outil externe 53 tourne pour réaliser le vissage.

Bien entendu l'inverse est possible, l'outil 52 tournant lors de l'opération de vissage tandis que l'outil 53 est fixe en rotation lors de cette opération

Dans certains cas particuliers où l'on a simultanément des couples importants à transmettre et/ou des acyclismes du moteur thermique du véhicule importants on observe des phénomènes de glissement, voir de desserrage de la poulie.

Cela est plus critique pour un alterno-démarreur que pour un alternateur car dans ce cas l'arbre 1 est, selon le mode de fonctionnement un arbre mené ou menant et il faut transmettre un couple important au démarrage du moteur thermique, l'arbre 1.

D'autre part, le couple transmissible avec ce type de dispositif d'assemblage est dépendant de la tension du dispositif d'assemblage, par le fait qu'on assure deux fonctions par le vissage de la poulie 8 à l'extrémité avant 13 de l'arbre 1, à savoir maintien de la mise sous tension du dispositif d'assemblage 9, et donc la position axiale de la poulie, et la transmission du couple en rotation.

Pour résoudre ce problème et transmettre plus de couple on fait appel selon l'invention à une liaison supplémentaire par soudage intervenant entre l'arbre 1 et la poulie 8.

Ainsi grâce à cette liaison supplémentaire on assure de manière fiable et durable la transmission du couple entre l'organe d'entraînement, ici la poulie 8, et l'arbre 1 du rotor, ainsi que le maintien en compression de l'empilage axial poulie 8, roulement 5 et entretoise 23. Le dispositif d'assemblage 9 est donc sans jeu.

Cette liaison supplémentaire consiste en un soudage comme visible en 90 dans les figures 1 et 3. Ce soudage est réalisé en final lors d'une troisième étape après les deux premières étapes précitées. Pour ce faire la poulie 8 et l'arbre 1 sont réalisés en matière soudable, ici en acier.

Dans ce mode de réalisation de la figure 1 la poulie 8 est vissée sur l'extrémité filetée 13 de l'arbre 1 et s'appui en final sur la butée constituée dans ce cas par la bague interne 50 du roulement 5 de façon à imposer lors de la deuxième étape du procédé de fabrication une tension entre 2 et 6 tonnes. Bien entendu la tension dépend des applications.

Ensuite, on vient réaliser lors d'une troisième étape une soudure entre, d'une part, le bout de l'extrémité fileté 13 de l'arbre 1 constituant l'extrémité libre avant de cet arbre 1 et d'autre part, la poulie 8, plus précisément la face avant 40 du fond 21 ou en variante la face avant du manchon de la poulie. Le trou 16, 17 débouche donc au niveau de cette face avant.

Dans un mode de réalisation la face avant 40 du fond 21 ou du manchon est plane.

Dans un autre mode de réalisation la face avant 40 du fond 21 ou la face avant 140 du manchon 120 est préalablement chanfreinée centralement comme visible dans ces figures 1 et 3. Ce chanfrein à une forme annulaire et le trou 16, 17 débouche au niveau de ce chanfrein.

On obtient avec ou sans chanfrein un cordon de soudure visible en 90 à la figure 1. Ce cordon 90 affecte localement la poulie et l'arbre.
Ce soudage permet de lier la poulie et l'arbre en assurant la continuité des matières.
Ce soudage est par exemple un soudage à l'arc du type TIG.
Ce soudage est donc réalisé dans un premier mode de réalisation sans contact à l'aide d'une soudeuse à électrode en tungstène sous gaz inerte, tel que de l'argon ou de l'hélium procurant une meilleure pénétration et un meilleur aspect de la soudure.
L'énergie calorifique de l'arc fait fondre localement la poulie à assembler.
En variante ce soudage TIG est réalisé avec apport de matière, tel que de l'acier doux ou de l'acier inoxydable.

Ce cordon de soudure est dans tous les cas bien exécuté et possède les caractéristiques suivantes :

Il possède un profil légèrement convexe.

Sa surface après refroidissement est douce et régulière en sorte que les poussières sont moins bien retenues.

Le soudage est rapide et pénétrant.

Le soudage permet d'avoir une zone de faible taille affectée par le soudage.

On peut faire tourner l'électrode de soudage, qui est avantageusement inclinée par rapport à la zone à souder.

En variante ce soudage est du type laser.

Dans un mode de réalisation le faisceau laser est piloté de manière séquentielle.

Bien entendu on peut également effectuer un soudage au laser par transparence. Dans ce cas le soudage peut être réalisé entre les extrémités de la partie filetée 13, notamment lorsque cette partie filetée coopère avec un taraudage d'un manchon de la poulie.

En variante, au lieu de réaliser un cordon de soudure 90 on réalise un soudage par au moins deux points.

Dans ce cas au lieu d'être chanfreinée, la face avant 40, 140 présente centralement des encoches dont le nombre dépend du nombre de points de soudage.
Dans un autre mode de réalisation ce soudage est réalisé avec apport de matière et consiste par exemple en un soudage du type MIG (Metal Inert Gas).
Dans ce cas l'électrode est constituée par le métal d'apport, tel que de l'acier doux ou de l'acier inoxydable. Le gaz est par exemple de l'argon ou de l'hélium.
En variante le soudage est du type MAG (Metal Active Gas).
Ce soudage se différencie du soudage MIG par son gaz qui est actif, tel que de l'argon mélangé avec du CO₂.
Dans tous les cas, dans un soudage avec apport de métal, l'arc fait fondre localement la poulie, l'arbre et le fil d'apport métallique pour constituer le bain de fusion et après refroidissement le cordon de soudure. On appréciera que ce soudage est rendu possible grâce au fait que la poulie est vissée sur l'arbre et donc grâce au fait que le dispositif d'assemblage 9 comporte un nombre de pièces réduit.
En effet on peut concevoir une solution dans laquelle l'extrémité filetée 13 est rallongée pour le montage d'une rondelle d'appui et d'un écrou de serrage et intervention de cannelures entre les tronçons 16 et 18.
Dans ce cas on augmente le nombre de pièces et l'écrou et la rondelle d'appui supplémentaires sont gênants pour l'opération de soudage. Grâce au dispositif 9 à poulie vissée on accède au bout de l'extrémité filetée 13 à la faveur de la cavité 19 non encombrée par un écrou. Suivant une caractéristique on tire partie au vissage de sous tension de la poulie.

Plus précisément après la deuxième étape de vissage sous tension du procédé de fabrication, on effectue dans une troisième étape du procédé une opération de soudage lors de laquelle on présente verticalement l'arbre équipé de son organe d'entraînement pour procéder au soudage par en-dessous.

Plus précisément on place sur un convoyeur plusieurs palettes.

Chaque palette est trouée pour le passage de la poulie, le palier avant de l'alternateur ou de l'alterno-démarreur étant dans un mode de réalisation en contact avec la face supérieure de la palette qui porte ainsi verticalement la machine électrique tournante.

On arrête le convoyeur de manière à ce qu'une palette équipée d'un machine en position verticale soit située au-dessus de la soudeuse, puis on effectue l'opération de soudage du côté de la face inférieure de la palette, c'est-à-dire en-dessous de la poulie.

Après on remet en route le convoyeur pour déplacer la palette à poulie soudée jusqu'à ce qu'une deuxième palette équipée d'une deuxième machine en position verticale se présente en dessous de la soudeuse pour souder une autre poulie et ainsi de suite.

Le palier avant de la machine étant dans un mode de réalisation ajouré, on tire partie de cette configuration pour dans un mode de réalisation indexer angulairement le palier avant à l'aide d'au moins deux pions d'indexage de la palette pénétrant chacun dans un trou calibré du palier avant.

Dans un mode réalisation on arrête la torche de soudage ou le faisceau laser entre deux poulies consécutives, cette opération d'arrêt étant plus rapide avec le laser. Le soudage est ainsi propre.

En variante ou n'arrête pas le faisceau laser ou la torche.

La torche ou le faisceau laser étant dans un mode de réalisation inclinés de manière précitée.

On peut faire tourner la torche ou le faisceau laser par rapport à la palette équipée de la poulie à souder ou en variante faire tourner la palette par apport à la torche ou au faisceau laser.

Bien entendu la présente invention n'est pas limitée aux exemples de réalisations décrits.

Ainsi en variante le rotor 2 est remplacé par un rotor à pôles saillants et/ou à aimants permanents.

La présence de deux ventilateurs n'est pas indispensable, le ventilateur avant 3 pouvant être supprimé.

Dans le mode de réalisation de la figure 1 la machine est refroidie par circulation d'air. En variante la machine est refroidie par circulation de liquide, la présence des ventilateurs n'étant pas indispensable.

L'invention est utilisable, bien entendu, dans d'autres domaines de machine électrique tournante nécessitant la solidarisation en rotation d'un organe d'entraînement sur un arbre rotatif. Ainsi la solution selon l'invention s'applique à des démarreurs de moteur thermique comportant une poulie d'entraînement tel que décrit par exemple dans le document EP A 1 293 665.
Dans ce cas on peut supprimer l'ensemble écrou de fixation-rondelle d'appui et visser la poulie sur l'extrémité filetée de l'arbre épaulée et ensuite à une opération de soudage.
A la lumière de ce document on voit que la butée axiale pour mise en tension du dispositif d'assemblage est en variante constituée par un épaulement de l'arbre.
On voit que l'arbre 1 peut être entraîné par le rotor de la machine avec interposition d'une roue libre et d'un train d'engrenages. L'invention est également applicable à un alterno-démarreur à train d'engrenages du type de celui décrit dans le document US A 5 418 400
Dans tous les cas l'arbre 1 de la machine électrique tournante est relié directement au rotor (figure 1) ou indirectement au rotor comme dans ces documents EP A 1 293 665 et US A 5 418 400. L'arbre 1 est donc dans tous les cas accouplé au rotor de la machine électrique tournante.
Bien entendu le carter de la machine peut, dans mode de réalisation, présenter un palier avant doté d'un nez pénétrant dans la cavité de la poulie comme visible dans le document EP A 1 293 665 précité. Dans ce cas l'outil interne 52 peut être conservé et l'outil externe 53 peut comporter des ergots, par exemple deux ergots diamétralement opposés, s'engageant chacun dans une creusure locale réalisée au niveau de la face avant de la poulie, par exemple au niveau de la périphérie externe de la poulie la ou il y a le plus de matière.

La poulie 8 peut présenter à sa périphérie externe une pluralité de dents d'orientation axiales réparties circonférentiellement de manière régulière pour coopération avec une courroie dentée de manière complémentaire.

En variante ces dents coopèrent avec une chaîne appartenant au dispositif de transmission de mouvement entre le moteur thermique et l'arbre 1 de la machine électrique tournante. La poulie 8 est dans ce cas une roue dentée.

En variante ce dispositif de transmission de mouvement comporte des engrenages, la poulie étant dans ce cas remplacée par un engrenage.

La poulie 8 est donc une forme particulière d'un organe d'entraînement consistant en variante en une roue dentée ou en un engrenage, cet organe appartenant à un dispositif de transmission de mouvement entre l'arbre 1 et un moteur thermique ou en variante électrique.

Bien entendu dans un mode de réalisation on peut rallonger l'extrémité filetée avant pour que celle-ci fasse saillie axialement par rapport à la face 40 avant du fond 21 ou du manchon en sorte que le soudage n'est pas forcément réalisé en bout de la partie filetée 13 de l'arbre 1.

L'extrémité avant de l'arbre peut présenter un tronçon lisse de faible longueur.

Dans tous les cas l'arbre 1 comporte à l'avant une partie filetée 13 sur laquelle est montée de manière solidaire en rotation et en translation l'organe d'entraînement 8 ici en forme de poulie, à filetage interne 17 formant un taraudage.

## Revendications

1. Dispositif d'assemblage par vissage d'un organe d'entraînement avec un arbre destiné à être accouplé au rotor d'une machine électrique tournante,telle qu'un alternateur ou un alterno-démarreur, l'organe d'entraînement (8) comportant, d'une part, une cavité (19) délimitée par un fond (21) ou un manchon (120) et d'autre part, un trou central (16, 17) pourvu d'un tronçon interne fileté (17) débouchant au niveau de la face avant du fond (21) ou du manchon, tandis que l'arbre (1) comporte à l'avant une partie filetée (13) destinée à coopérer avec le tronçon fileté (17) de l'organe d'entraînement pour le vissage de celle-ci, **caractérisé en ce qu'**il comporte une liaison supplémentaire par soudage réalisée entre la face avant (40) du fond (21) ou du manchon (120) de l'organe d'entraînement (8) et la partie filetée (13) de l'arbre (1).

2. Dispositif d'assemblage selon la revendication 1, **caractérisé en ce que** la liaison supplémentaire consiste en un soudage du type TIG avec ou sans apport de matière.

3. Dispositif d'assemblage selon la revendication 1, **caractérisé en ce que** la liaison supplémentaire consiste en un soudage du type laser, notamment par transparence.

4. Dispositif d'assemblage selon la revendication 1, **caractérisé en ce que** la liaison supplémentaire consiste en un soudage du type MIG ou MAG.

5. Dispositif d'assemblage selon l'une quelconque des revendications précédentes, **caractérisé en ce que** la face avant (40) du fond (21) ou la face avant (140) du manchon (120) de l'organe d'entraînement (8) est chanfreinée et **en ce que** le trou (16, 17) débouche au niveau du chanfrein.

6. Dispositif selon l'une quelconque des revendications précédentes, **caractérisé en ce que** l'arbre (1) porte une butée axiale (50) pour appui de l'organe d'entraînement et mise sous tension du dispositif d'assemblage (9).

7. Dispositif selon la revendication 6, **caractérisé en ce que** la butée axiale est constituée de manière directe ou indirecte par la bague interne (50) d'un roulement (5).

8. Dispositif selon l'une quelconque des revendications précédentes, **caractérisé en ce que** l'organe d'entraînement (8) et la partie filetées (13) de l'arbre (1) présentent des empreintes (51, 50) destinées à coopérer avec des empreintes complémentaires appartenant à des outils (53, 52) pour le vissage de l'organe d'entraînement (8) sur l'extrémité filetée (13) de l'arbre (1).

9. Dispositif selon quelconque des revendications précédentes,, **caractérisé en ce que** l'organe d'entraînement est une poulie vissée sur un arbre destiné à être accouplé au rotor d'un alternateur ou d'un alterno-démarreur.

10. Procédé de fabrication d'un dispositif d'assemblage par vissage selon l'une quelconque des revendications précédentes, **caractérisé en ce qu'**il comporte une étape de vissage de l'organe d'entraînement sur la partie filetée de l'arbre suivie d'un opération de soudage lors de laquelle on présente verticalement l'arbre équipé de son organe d'entraînement pour procéder au soudage par en-dessous.

## Claims

1. Device for assembly by screwing of a drive unit with a shaft which is designed to be coupled to the rotor of a rotary electric machine, such as an alternator or an alternator starter, the drive unit (8) comprising firstly a cavity (19) which is delimited by a base (21) or a sleeve (120), and secondly a central hole (16, 17) which is provided with a threaded inner section (17) which opens at the level of the front surface of the base (21) or of the sleeve, whereas the shaft (1) comprises at the front a threaded part (13) which is designed to co-operate with the threaded section (17) of the drive unit, for screwing of the latter, **characterised in that** it comprises an additional connection by welding, which is provided between the front surface (40) of the base (21) or of the sleeve (120) of the drive unit (8) and the threaded part (13) of the shaft (1).

2. Assembly device according to claim 1, **characterised in that** the additional connection consists of welding of the TIG type, with or without the addition of material.

3. Assembly device according to claim 1, **characterised in that** the additional connection consists of welding of the laser type, in particular by transparency.

4. Assembly device according to claim 1, **characterised in that** the additional connection consists of welding of the MIG or MAG type.

5. Assembly device according to any one of the preceding claims, **characterised in that** the front surface (40) of the base (21) or the front surface (140) of the sleeve (120) of the drive unit (8) is chamfered, and **in that** the hole (16, 17) opens at the level of the chamfer.

6. Assembly device according to any one of the preceding claims, **characterised in that** the shaft (1) supports an axial stop (50) for support of the drive unit and tensioning of the assembly device (9).

7. Assembly device according to claim 6, **characterised in that** the axial stop is constituted directly or indirectly by the inner ring (50) of a bearing (5).

8. Assembly device according to any one of the preceding claims, **characterised in that** the drive unit (8) and the threaded part (13) of the shaft (1) have indentations (51, 50) which are designed to co-operate with complementary indentations which belong to tools (53, 52) for screwing of the drive unit (8) onto the threaded end (13) of the shaft (1).

9. Device according to any one of the preceding claims, **characterised in that** the drive unit is a pulley which is screwed onto a shaft which is designed to be coupled to the rotor of an alternator or an alternator starter.

10. Method for production of a device for assembly by screwing according to any one of the preceding claims, **characterised in that** it comprises a step of screwing of the drive unit onto the threaded part of the shaft, followed by a welding operation, during which the shaft equipped with its drive unit is presented vertically, in order to carry out the welding from below.

## Patentansprüche

1. Vorrichtung zur Schraubverbindung eines Antriebsorgans mit einer Welle, die dazu bestimmt ist, mit dem Rotor einer rotierenden elektrischen Maschine, etwa eines Wechselstromgenerators oder eines Anlassergenerators, gekoppelt zu werden, wobei das Antriebsorgan (8) einerseits eine durch einen Boden (21) oder einer Muffe (120) begrenzte Aufnahme (19) und andererseits eine mittige Bohrung (16, 17) mit einem inneren Gewindeteilstück (17) umfasst, das in Höhe der Vorderseite des Bodens (21) bzw. der Muffe mündet, während die Welle (1) vorn eine Gewindeteil (13) für das Zusammenwirken mit dem Gewindeteilstück (17) des Antriebsorgans für dessen Verschraubung aufweist, **dadurch gekennzeichnet, dass** sie eine zwischen der Vorderseite (40) des Bodens (21) bzw. der Muffe (120) des Antriebsorgans (8) und dem Gewindeteil (13) der Welle (1) ausgeführte zusätzliche Schweißverbindung umfasst.

2. Verbindungsvorrichtung nach Anspruch 1, **dadurch gekennzeichnet, dass** die zusätzliche Verbindung aus einer WIG-Schweißung mit oder ohne Zusatzwerkstoff besteht.

3. Verbindungsvorrichtung nach Anspruch 1, **dadurch gekennzeichnet, dass** die zusätzliche Verbindung aus einer Laserschweißung, insbesondere aus einer Laser-Durchstrshischweißung, besieht.

4. Verbindungsvorrichtung nach Anspruch 1, **dadurch gekennzeichnet, dass** die zusätzliche Verbindung aus Einer MIG- oder MAG-Schweißung besteht.

5. Verbindungsvorrichtung nach einem der vorangehenden Ansprüche, **dadurch gekennzeichnet, dass** die Vorderseite (40) des Bodens (21) bzw die Vorderseite (140) des Muffe (120) des Antriebsorgans (8) abgeschrägt ist und dass die Bohrung (16, 17) in Höhe der Abschrägung mündet.

6. Vorrichtung nach einem der vorangehenden Ansprüche, **dadurch gekennzeichnet, dass** die Welle (1) einen axialen Anschlag (50) für die Auflage des Antriebsorgans und die Spannung: der Verbindungsvorrichtung (9) trägt.

7. Vorrichtung nach Anspruch 6, **dadurch gekennzeichnet, dass** der axiale Anschlag direkt oder indirekt durch den Innenring (50) eines Wälzlagers (5) gebildet wird.

8. Vorrichtung nach einem der vorangehenden Ansprüche, **dadurch gekennzeichnet, dass** das Antriebsorgan (8) und der Gewindeteil (13) der Welle (1) Eintiefungen (51, 50) für das Zusammenwirken mit komplementären Eintiefungen aufweisen, die zu Werkzeugen (53, 52) für das Verschrauben des Antriebsorgans (8) am Gewindeende (13) der Welle (1) gehören.

9. Vorrichtung nach einem der vorangehenden Ansprüche, **dadurch gekennzeichnet, dass** das Antriebsorgan eine Riemenscheibe ist, die an einer Welle verschraubt ist, welche dazu bestimmt ist, mit dem Rotor eines Wechseistromgenerators oder eines Anlassergenerators gekoppelt zu werden,

10. Verfahren zur Herstellung einer Schraubverbindungsvorrichtung nach einem der vorangehenden Ansprüche, **dadurch gekennzeichnet, dass** es einen Verfahrensschritt zum Verschrauben des Antriebsorgans am Gewindeteil der Welle umfasst, auf den ein Schweißvorgang folgt, bei dem die mit ihrem Antriebsorgan versehene Welle vertikal angestellt wird, um das Schweißen von der Unterseite aus vorzunehmen.
